# EUROPÄISCHE PATENTANMELDUNG

(11) **EP 1 452 841 A2**
(43) Veröffentlichungstag der Anmeldung: **01.09.2004**
(21) Anmeldenummer: 04100066.2
(22) Anmeldetag: 12.01.2004
(51) Int. Cl.: G01F 23/36

(54) **Füllstandsgeber für einen Kraftstofftank eines Kraftfahrzeugs**

(30) Priorität: 28.02.2003 DE 10308957
(71) Anmelder: SIEMENS AKTIENGESELLSCHAFT, 80333 München (DE)
(72) Erfinder: Pauer, Bernd, 65817 Eppstein (DE); Rumpf, Bernd, 61130 Nidderau (DE)

(57) **Zusammenfassung**

Die Erfindung bezieht sich auf einen Füllstandsgeber für einen Kraftstoffbehälter mit einem an einem Hebelarm befestigten Schwimmer, mindestens einem an dem Hebelarm angeordneten Kontakt, der mit einer als Dickschichtwiderstand ausgebildeten Schleiferbahn in Verbindung steht. Der Dickschichtwiderstand besteht aus mindestens zwei Edelmetallen, wobei ein Edelmetall Silber ist und in einem geringeren Anteil als das andere Edelmetall vorhanden ist.

## Beschreibung

Gegenstand der Erfindung ist ein Füllstandsgeber mit einem an einem Hebelarm befestigten Schwimmer, mindestens einem an dem Hebelarm angeordneten Kontakt, der mit einer als Dickschichtwiderstand ausgebildeten Schleiferbahn in Verbindung steht.

Derartige Füllstandsgeber für einen Kraftstofftank eines Kraftfahrzeugs sind seit langem bekannter Stand der Technik. Die Dickschicht ist hierbei auf einem Substrat aufgebracht, welches oftmals eine Keramik ist. Die eigentliche Dickschicht umfasst ein oder mehrere Metalle. Hierbei ist es bekannt, Silber aufgrund der seiner guten Leitfähigkeit und Korrosionsbeständigkeit einzusetzen. Bei dem Einsatz eines derartigen Dickschichtwiderstandes in einem Füllstandssensor in einem Kraftstoffbehälter hat es sich gezeigt, dass Silber trotz seiner guten Korrosionsbeständigkeit von Kraftstoffen angegriffen wird. Insbesondere einige aggressive Bestandteile in bestimmten Kraftstoffen gehen mit Silber Reaktionen ein, die über die Betriebszeit des Füllstandssensors zu Ablagerungen auf der Oberfläche des Dickschichtwiderstandes. Diese Ablagerungen sind gekennzeichnet durch eine veränderte Leitfähigkeit. Infolgedessen führen die Ablagerungen zu Veränderungen der gemessenen Widerstandswerte, die im Widerspruch zu den tatsächlichen Verhältnissen im Kraftstoffbehälter stehen. Der Füllstandssensor arbeitet somit nicht mehr genau, bzw. der Füllstandssensor fällt im schlimmsten Fall aus.

Es ist weiterhin bekannt, zur Vermeidung dieses Nachteils Gold oder Platin als Material in Dickschichtwiderständen zu verwenden. Derartige Dickschichtwiderstände besitzen zwar eine höhere Korrosionsbeständigkeit. Neben den höheren Kosten für diese Materialien ist die Haftfestigkeit derartiger Dickschichten ungenügend. Zudem weisen Dickschichten aus Gold oder Platin ein schlechtes Lötverhalten auf. Um dennoch eine hinreichende Kontaktsicherheit zu erreichen, besitzen überproportionale Lötflächen für die Anschlusskontakte. Diese Ausgestaltung mit den damit verbundenen hohen Kosten wurde bisher hingenommen und als technisches Optimum betrachtet.

Der vorliegenden Erfindung liegt die Aufgabe zugrunde, einen Füllstandsgeber mit einem Dickschichtwiderstand zu schaffen, der eine hohe Korrosionsbeständigkeit gegenüber Kraftstoffen aufweist und eine gute Haftfestigkeit auf einem Substrat gewährleistet.

Gelöst wird die Aufgabe mit den Merkmalen des Anspruchs 1. Vorteilhafte Ausgestaltungen sind in den Unteransprüchen beschrieben.

Der erfindungsgemäße Füllstandsgeber besteht aus einem an einem Hebelarm befestigten Schwimmer, mindestens einem an dem Hebelarm angeordneten Kontakt, der mit einer als Dickschichtwiderstand ausgebildeten Schleiferbahn in Kontakt steht, wobei der Dickschichtwiderstand mindestens zwei Edelmetalle enthält, wobei eins der Edelmetalle Silber ist und in einem geringeren Anteil als das oder die anderen Edelmetalle vorhanden ist.

Es wurde gefunden, dass bereits ein geringer Anteil an Silber die Löslichkeit von anderen Materialien der Dickschicht verbessert. Die höhere Löslichkeit führt zu einer verbesserten Haftfestigkeit der Dickschicht auf dem Substrat. Weiterhin kommt es zu einer dichteren Verteilung auf dem Keramikträger und einer homogeneren Oberfläche der Dickschicht. Damit erlaubt die Verwendung von Silber den Einsatz von Gold und/oder Platin als wesentliche Bestandteile der Dickschicht mit den damit verbundenen hervorragenden Eigenschaften hinsichtlich elektrischer Leitfähigkeit und Korrosionsbeständigkeit. Mit dem geringen Anteil von Silber wird zudem erreicht, dass nahezu kein Silber in der Oberfläche der Dickschicht vorhanden ist, wodurch parasitäre Ablagerungen mit veränderten Widerstandswerten vermieden werden. Der Füllstandssensor zeichnet sich daher durch eine besonders hohe Betriebssicherheit über die gesamte Lebensdauer des Füllstandssensors aus. Damit eignet sich der erfindungsgemäße Füllstandssensor gleichzeitig für den Einsatz in aggressiven Kraftstoffen.

Als besonders vorteilhaft hat sich ein Anteil von Silber in der Dickschicht von 0,1 % bis 10 % erwiesen, wobei der Anteil von Silber in Abhängigkeit vom Einsatz im verwendeten Kraftstoff gewählt werden kann. Insbesondere bei aggressiven Bestandteilen im Kraftstoff, z. B. Ethanol, wird der Silberanteil niedrig gewählt. So wird bei einem Anteil von 1 % Silber eine gute Haftfestigkeit und ein gutes Lötverhalten erreicht, während Ablagerungen auf der Oberfläche des Dickschichtwiderstandes nicht beobachtet wurden.

An einem Ausführungsbeispiel wird die Erfindung näher erläutert.

Die einzigste Figur zeigt einen Füllstandsgeber 1 für einen Einsatz in einem Kraftstoffbehälter. Auf einem Träger 2 ist ein aus Keramik bestehendes Substrat 3 angeordnet, welches eine als Widerstandsnetzwerk ausgebildete Dickschicht 4 enthält. Am Träger 2 ist in einer Bohrung 5 ein Hebelarm 6 über einen Bügel 7 drehbar gelagert. Am anderen Ende des Hebelarmes 6 ist ein Schwimmer 8 angeordnet. Am Bügel 7 befindet sich ein Kontakt 9, der mit der die Form einer Schleiferbahn aufweisenden Dickschicht 4 in Verbindung steht. In Abhängigkeit vom Füllstand in dem Kraftstoffbehälter wird der Schwimmer 8 ausgelenkt. Entsprechend der Auslenkung durch den Schwimmer 8 wird der Kontakt 9 über die Dickschicht 4 bewegt. Über Anschlussleitungen wird der gemessene Widerstandswert einer nicht dargestellten Auswerteeinheit zugeführt. Die Dickschicht 4 besteht aus den Edelmetallen Gold, Platin und Silber, die in einer Glasmatrix eingebettet sind. Der Anteil von Silber beläuft sich 1 %.

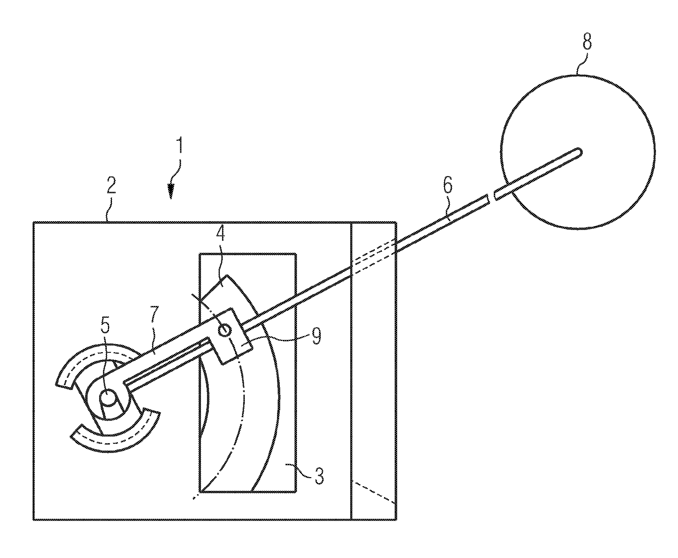

## Patentansprüche

1. Füllstandsgeber für einen Kraftstoffbehälter mit einem an einem Hebelarm befestigten Schwimmer, mindestens einem an dem Hebelarm angeordneten Kontakt, der mit einer als Dickschichtwiderstand ausgebildeten Schleiferbahn in Verbindung steht, wobei der Dickschichtwiderstand aus mindestens zwei Edelmetallen besteht, **dadurch gekennzeichnet, dass** ein Edelmetall Silber ist und in einem geringeren Anteil als das andere Edelmetall vorhanden ist.

2. Füllstandsgeber nach Anspruch 1, **dadurch gekennzeichnet, dass** als weitere Edelmetalle Gold, Platin und/oder Palladium in der Dickschicht (4) vorhanden sind.

3. Füllstandsgeber nach Anspruch 1 und 2, **dadurch gekennzeichnet, dass** in der Dickschicht (4) Silber in einem Anteil von 0,1 % bis 10 % enthalten ist.

4. Füllstandsgeber nach einem der vorhergehenden Ansprüche, **dadurch gekennzeichnet, dass** in der Dickschicht (4) Silber in einem Anteil von 0,5 % bis 5 % enthalten ist.

5. Füllstandsgeber nach einem der vorhergehenden Ansprüche, **dadurch gekennzeichnet, dass** in der Dickschicht (4) Silber mit einem Anteil von 1 % enthalten ist.
